(19) Europäisches Patentamt
European Patent Office
Office européen des brevets

(11) EP 4 023 439 B1

(12) # EUROPEAN PATENT SPECIFICATION

(45) Date of publication and mention of the grant of the patent:
**18.09.2024 Bulletin 2024/38**

(21) Application number: **20856862.6**

(22) Date of filing: **19.08.2020**

(51) International Patent Classification (IPC):
***B32B 27/30*** *(2006.01)* ***B32B 27/00*** *(2006.01)*
***B32B 27/18*** *(2006.01)* ***B32B 7/023*** *(2019.01)*
***B32B 27/08*** *(2006.01)*

(52) Cooperative Patent Classification (CPC):
(C-Sets available)
**B32B 7/023; B32B 7/12; B32B 27/00; B32B 27/08; B32B 27/18; B32B 27/30; B32B 27/304; B32B 27/308; B32B 27/36; C08K 5/3492;**
B32B 2250/02; B32B 2250/24; B32B 2270/00; B32B 2307/30; B32B 2307/308; (Cont.)

(86) International application number:
**PCT/JP2020/031281**

(87) International publication number:
**WO 2021/039533 (04.03.2021 Gazette 2021/09)**

(54) **VINYLIDENE FLUORIDE RESIN MULTILAYER FILM, AUTOMOBILE INTERIOR/EXTERIOR FILM, AUTOMOBILE COMPONENT, AND AUTOMOBILE**

MEHRSCHICHTFOLIE AUS VINYLIDENFLUORIDHARZ, INNEN-/AUSSENSCHICHT EINES KRAFTFAHRZEUGS, BAUTEIL EINES KRAFTFAHRZEUGS UND KRAFTFAHRZEUG

FILM MULTICOUCHE DE RÉSINE DE FLUORURE DE VINYLIDÈNE, FILM INTÉRIEUR/ EXTÉRIEUR D’AUTOMOBILE, COMPOSANT D’AUTOMOBILE ET AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2019 JP 2019153969**

(43) Date of publication of application:
**06.07.2022 Bulletin 2022/27**

(73) Proprietor: **Denka Company Limited
Tokyo 103-8338 (JP)**

(72) Inventors:
- **NAGAOKA Kota
Tokyo 103-8338 (JP)**
- **TAKANO Keiji
Tokyo 103-8338 (JP)**
- **MIYAMURA Yasushi
Tokyo 103-8338 (JP)**
- **YASUMOTO Noriaki
Tokyo 103-8338 (JP)**

(74) Representative: **Hoffmann Eitle
Patent- und Rechtsanwälte PartmbB
Arabellastraße 30
81925 München (DE)**

(56) References cited:
**WO-A1-2016/024592 WO-A1-2017/043467
WO-A1-2019/107302 WO-A1-2019/107302
FR-A1- 3 011 552 JP-A- 2004 223 919
JP-A- 2016 054 702 JP-A- 2016 535 799
JP-A- 2018 079 591**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/406; B32B 2307/412; B32B 2307/414; B32B 2307/584; B32B 2307/704; B32B 2307/71; B32B 2307/712; B32B 2307/7265; B32B 2307/732; B32B 2307/75; B32B 2605/003; B32B 2605/006; B32B 2605/08; Y02E 10/50

C-Sets
**C08K 5/3492, C08L 33/06**

## Description

### Technical Field

The present invention relates to a vinylidene fluoride resin multilayer film, an automobile interior/exterior film, an automobile component, and an automobile.

### Background Art

From the related art, a fluorine resin multilayer film has been required to be capable of withstanding extreme conditions or long-term use, and a fluorine resin multilayer film having such properties has been used in various uses.

For example, recently, the fluorine resin multilayer film has been used as a back sheet for a solar cell module by utilizing the properties such as weather resistance (for example, Patent Literature 1).

In addition, for example, recently, a decorative film including a fluorine resin multilayer film and a decorative layer has been molded, for example, to be used on the surface of a car interior or exterior component, an electronic device, general merchandise, or the like, as a replacement for painting (for example, Patent Literature 2). WO 2017/043467 A1 gives an example of a vinylidene fluoride resin multilayer film comprising two layers in which a back layer and a surface layer are laminated,

### Citation List

#### Patent Literature

Patent Literature 1: International Publication WO 2015/016147
Patent Literature 2: International Publication WO 2019/107302

### Summary of Invention

#### Technical Problem

In the related art, in order to obtain ultraviolet cutting properties of the vinylidene fluoride resin multilayer film, an ultraviolet absorber is added to a methacrylic ester resin of a back layer. As the ultraviolet absorber, for example, a triazine ultraviolet absorber, a benzotriazole ultraviolet absorber, an oxalic acid ultraviolet absorber, a benzophenone ultraviolet absorber, a hindered amine ultraviolet absorber, and other various types of ultraviolet absorbers are used.

The present inventors have conducted various studies about the weather resistance or the like of a vinylidene fluoride resin multilayer film including two layers in which a surface layer is laminated on a back layer. At this time, the present inventors examined the discoloration of the vinylidene fluoride resin multilayer film (specifically, the whitening of a two-layer film including a back layer and a surface layer) and the bleedout in a thermal cycle test, but obtained no satisfactory results for both of the discoloration and the bleedout in 2-(4,6-diphenyl-1,3,5-triazin-2-yl)-5-[(hexyl)oxy]-phenol (for example, Tinuvin 1577ED or the like) which is commonly used as a triazine ultraviolet absorber.

Therefore, a main object of the present invention is to provide a vinylidene fluoride resin multilayer film excellent in bleedout resistance to a temperature change, discoloration resistance to a temperature change, and ultraviolet cutting properties. In addition, another object of the present invention is to provide an automobile interior/exterior film, an automobile component, and an automobile using the vinylidene fluoride resin multilayer film.

In general, the "bleedout" phenomenon of the film indicates a phenomenon in which an additive contained in the film rises up to the surface of the film with time.

The "discoloration" of the multilayer film in the present technology indicates that a hue change occurs in the multilayer film before and after the start of the thermal cycle test when exposed to a temperature change in the test.

#### Solution to Problem

The invention is as defined in the independent claims and the embodiments are defined in the dependent claims. First, regarding the bleedout resistance to a temperature change, the discoloration resistance to a temperature change, and the ultraviolet cutting properties, the present inventors reexamined raw materials to be used in the back layer or the surface layer of the vinylidene fluoride resin multilayer film, each blending amount, or the like.

In addition, regarding the cause of the discoloration of the vinylidene fluoride resin multilayer film, the present

inventors cut the multilayer film longitudinally before and after the thermal cycle test, and observed each cut surface with a scanning electron microscope (SEM). The cut surface before the thermal cycle was smooth, but for the cut surface after the thermal cycle, needle-shaped crystals were observed on the sectional surface of the back layer portion. As a result of performing energy dispersive X-ray analysis (EDS) with respect to the needle-shaped crystals, N atoms were detected from the crystals. Since a raw material containing N atoms other than the triazine ultraviolet absorber is not contained in the vinylidene fluoride resin multilayer film, the present inventors considered that the N atoms are derived from the triazine ultraviolet absorber.

The present inventors obtained a vinylidene fluoride resin multilayer film in which the content of a fluorine resin was decreased and a methacrylic ester resin was contained at a higher content than a specific content in a back layer (for example, refer to Comparative Example 3 in Examples described below). In such a vinylidene fluoride resin multilayer film, a satisfactory result for the discoloration resistance to a temperature change was obtained in the thermal cycle test.

However, in such a vinylidene fluoride resin multilayer film, since powder-shaped foreign substances were observed on the surface of the multilayer film in the thermal cycle test, the bleedout phenomenon was still observed. Accordingly, in such a vinylidene fluoride resin multilayer film, a satisfactory result for the bleedout resistance to a temperature change was not obtained.

The present inventors performed IR analysis with respect to the powder-shaped foreign substances generated by the bleedout, and identified that the powder-shaped foreign substances are a triazine ultraviolet absorber of 2-(4,6-diphenyl-1,3,5-triazin-2-yl)-5-[(hexyl)oxy]-phenol. The triazine ultraviolet absorber was the same as the ultraviolet absorber used in the back layer. Accordingly, the present inventors considered that the triazine ultraviolet absorber was precipitated on the surface portion of the back layer in the thermal cycle test and detected as the powder-shaped foreign substances.

Accordingly, the present inventors considered that a causative substance of the bleedout to a temperature change and the discoloration to a temperature change is the triazine ultraviolet absorber.

Then, the present inventors further reexamined the raw materials to be used in the back layer or the surface layer of the vinylidene fluoride resin multilayer film, each of the blending amounts, or the like, including the change of the ultraviolet absorber to systems other than triazine.

As a result of conducting intensive studies, the present inventors have found that it is possible to provide a vinylidene fluoride resin multilayer film excellent in bleedout resistance to a temperature change, discoloration resistance to a temperature change, and ultraviolet cutting properties by using a specific amount of a triazine compound having a molecular weight of 500 or more for an ultraviolet absorber in a back layer , wherein the triazine ultraviolet absorber is selected from 2-[4,6-di(4-biphenylyl)-1,3,5-triazine-2-yl]-5-(2-ethylhexyloxy) phenol;2,4-bis(2,4-dimethylphenyl)-6-(2-hydroxy-4-n- octyloxyphenyl)-1,3,5-triazine; and 2,4,6-tris(2-hydroxy-4-hexyloxy-3-methylphenyl)1,3,5-triazine, while containing a methacrylic ester resin in the back layer at a higher content, and completed the present invention. That is, the present invention is as follows.

The present invention is capable of providing a vinylidene fluoride resin multilayer film comprising two layers in which a back layer and a surface layer are laminated, in which the surface layer comprises 80% by mass or more of a vinylidene fluoride resin on the basis of a total amount of resin components of the surface layer, the back layer comprises 85% by mass or more of a methacrylic ester resin on the basis of a total amount of resin components of the back layer, and the back layer comprises 3.5 parts by mass or less of a triazine ultraviolet absorber having a molecular weight of 500 or more with respect to 100 parts by mass of total resin components of the back layer, and wherein the triazine ultraviolet absorber is selected from 2-[4,6-di(4-biphenylyl)-1,3,5-triazine-2-yl]-5-(2-ethylhexyloxy) phenol;2,4-bis(2,4-dimethylphenyl)-6-(2-hydroxy-4-n- octyloxyphenyl)-1,3,5-triazine; and 2,4,6-tris(2-hydroxy-4-hexyloxy-3-methylphenyl)1,3,5-triazine.

The surface layer may comprise 80% by mass or more of the vinylidene fluoride resin and 20% by mass or less of the methacrylic ester resin, on the basis of the total amount of the resin components of the surface layer.

The vinylidene fluoride resin of the surface layer may comprise a copolymer of vinylidene fluoride and hexafluoropropene and/or polyvinylidene fluoride.

In the vinylidene fluoride resin multilayer film, HAZE to be measured on the basis of JIS K7136 may be less than 10%.

The vinylidene fluoride resin multilayer film may be a vinylidene fluoride resin multilayer film for a decorative film.

In addition, the present invention is also capable of providing an automobile interior/exterior film formed by using the vinylidene fluoride resin multilayer film.

In addition, the present invention is also capable of providing an automobile in which the automobile interior/exterior film is adhered to a surface.

In addition, the present invention is also capable of providing an automobile component in which the automobile interior/exterior film is adhered to a surface.

## Advantageous Effects of Invention

According to the present invention, it is possible to provide a vinylidene fluoride resin multilayer film excellent in bleedout resistance to a temperature change, discoloration resistance to a temperature change, and ultraviolet cutting properties. In addition, according to the present invention, it is possible to provide an automobile interior/exterior film, an automobile component, and an automobile using the vinylidene fluoride resin multilayer film.
Note that, the effects described herein are not necessarily limited, and may be any of the effects described in the present technology.

## Brief Description of Drawings

FIG. 1 is a schematic view illustrating a structure used in each evaluation for bleedout resistance to a temperature change, discoloration resistance to a temperature change, or the like.
FIG. 2 is a diagram illustrating a structure used in evaluation for ultraviolet cutting properties.

## Description of Embodiments

Hereinafter, a preferred embodiment for carrying out the present invention will be described. Note that, the following embodiment indicates an example of a representative embodiment of the present invention, and the scope of the present invention is not narrowly construed by the embodiment. Note that, herein, a percentage is expressed by a mass unless otherwise specified. In addition, an upper limit value and a lower limit value of each numerical range can be randomly combined, as desired.

[1. Vinylidene Fluoride Resin Multilayer Film]

A vinylidene fluoride resin multilayer film of the present invention may be composed of two layers in which a back layer and a surface layer are laminated, or may have another layer laminated on one side or both sides of the two layers.
The vinylidene fluoride resin multilayer film of the present invention is a vinylidene fluoride resin multilayer film including two layers in which a back layer and a surface layer are laminated, in which the surface layer is a layer containing a vinylidene fluoride resin at a high content (hereinafter, also referred to as a "fluorine-rich resin layer"), and the back layer is a layer containing a methacrylic ester resin at a high content (hereinafter, also referred to as a "methacrylic-rich resin layer"). Further, the present invention is capable of providing the vinylidene fluoride resin multilayer film in which the back layer contains a predetermined amount of a triazine ultraviolet absorber having a molecular weight of 500 or more with respect to 100 parts by mass of total resin components of the back layer. Accordingly, bleedout resistance to a temperature change, discoloration resistance to a temperature change, and ultraviolet cutting properties of the vinylidene fluoride resin multilayer film can be more excellent.
By having such properties, it is possible to apply the vinylidene fluoride resin multilayer film of the present invention to a film in wide use, such as a decorative film or an automobile interior/exterior film. Further, it is possible to provide an automobile or an automobile component to which the film is adhered.

<1-1. Surface Layer>

<1-1-1. Fluorine-Rich Resin Layer of Surface Layer>

The surface layer is a fluorine-rich resin layer containing 80% by mass or more of the vinylidene fluoride resin, on the basis of the total amount (100% by mass) of the resin components of the surface layer. In addition, the surface layer may contain 20% by mass or less of the methacrylic ester resin on the basis of the total amount of the resin components of the surface layer, and may not contain the methacrylic ester resin. It is preferable that the fluorine-rich resin layer contains 80% by mass or more of the vinylidene fluoride resin and 20% by mass or less of the methacrylic ester resin. It is preferable that the total amount of the vinylidene fluoride resin and the methacrylic ester resin in the surface layer is 100% by mass.
Accordingly, the bleedout resistance, the discoloration resistance, the ultraviolet cutting properties of the vinylidene fluoride resin multilayer film can be more excellent.
The methacrylic ester resin is excellent in compatibility with the vinylidene fluoride resin, capable of improving workability by decreasing an extrusion temperature during film extrusion molding, and capable of improving adhesiveness

when laminated with other materials.

Since in a case where a methacrylic ester resin component to be contained in the surface layer excessively increases, the component is oxidized and the discoloration of the film increases, it is possible to suppress the discoloration of the film by setting the content of the methacrylic ester resin to 20% by mass or less.

The surface layer is a fluorine-rich resin layer containing preferably 85% by mass or more of the vinylidene fluoride resin, more preferably 88% by mass or more of the vinylidene fluoride resin, and even more preferably 90% by mass or more of the vinylidene fluoride resin, on the basis of the total amount (100% by mass) of the resin components of the surface layer. In addition, the content of the methacrylic ester resin in the surface layer is preferably 15% by mass or less, more preferably 12% by mass or less, and even more preferably 10% by mass or less, on the basis of the total amount of the resin components of the surface layer. Accordingly, the bleedout resistance, the discoloration resistance, and the ultraviolet cutting properties of the vinylidene fluoride resin multilayer film can be more excellent.

The surface layer may be a fluorine-rich resin layer substantially composed of the vinylidene fluoride resin, or a fluorine-rich resin layer containing 100% by mass of the vinylidene fluoride resin on the basis of the total amount of the resin components of the surface layer. "Substantially" indicates that the methacrylic ester resin can be contained within the range not impairing the effects of the present invention, and for example, approximately 0.5% by mass or less of the methacrylic ester resin may be contained.

<1-1-2. Vinylidene Fluoride Resin Used in Surface Layer of Present Invention>

In the surface layer of the present invention, as described above, the vinylidene fluoride resin can be used. Note that, the vinylidene fluoride resin can also be suitably applied to the back layer described below.

The vinylidene fluoride resin that can be used in the surface layer of the present invention is not particularly limited insofar as the vinylidene fluoride resin is a vinylidene fluoride polymer, and for example, a homopolymer of a vinylidene fluoride monomer or a copolymer of a vinylidene fluoride monomer and other monomers copolymerizable therewith. A vinylidene fluoride copolymer is not particularly limited, and examples thereof include a vinylidene fluoride-tetrafluoroethylene-hexafluoropropylene copolymer, a vinylidene fluoride-hexafluoropropylene copolymer, and the like. One type or two or more types selected from the group consisting of the polymers and the copolymers can be used.

In a case where the vinylidene fluoride resin is a copolymer of a vinylidene fluoride monomer and other vinyl compound monomers, examples of a vinyl compound copolymerizable with the vinylidene fluoride monomer include a fluorinated vinyl compound such as vinyl fluoride, tetrafluoroethylene, chlorotrifluoroethylene, and hexafluoropropylene, and a known vinyl monomer such as styrene, ethylene, butadiene, and propylene. One type or two or more types selected from the group consisting of the monomers can be used in the copolymer.

The vinylidene fluoride resin can be preferably one type or two or more types of vinylidene fluoride resins selected from the group consisting of polyvinylidene fluoride, a vinylidene fluoride-hexafluoropropylene copolymer, a vinylidene fluoride-hexafluoropropylene-tetrafluoroethylene copolymer, an ethylene-chlorotrifluoroethylene copolymer, and an ethylene-tetrafluoroethylene copolymer.

The vinylidene fluoride resin used in surface layer of the present invention contains preferably a copolymer of vinylidene fluoride and hexafluoropropene and/or polyvinylidene fluoride, and more preferably at least polyvinylidene fluoride, from the viewpoint of the compatibility with the methacrylic ester resin. Accordingly, the bleedout resistance, the discoloration resistance, and the ultraviolet cutting properties of the vinylidene fluoride resin multilayer film can be more excellent.

<1-1-3. Methacrylic Ester Resin Used in Surface Layer of Present Invention>

In the surface layer of the present invention, as described above, the methacrylic ester resin can be used. Note that, the methacrylic ester resin can also be suitably applied to the back layer described below.

The methacrylic ester resin that can be used in the surface layer of the present invention is not particularly limited insofar as the methacrylic ester resin is a methacrylic ester polymer having a methacrylic ester monomer unit as a main component, and for example, a homopolymer of a methacrylic ester (for example, methyl methacrylate or the like) monomer or a copolymer of a methacrylic ester (for example, methyl methacrylate or the like) monomer and other monomers copolymerizable therewith. The methacrylic ester polymer may be a homopolymer of one type of methacrylic ester monomer, a copolymer of two or more types of methacrylic ester monomers, or a copolymer of one type or two or more types of methacrylic esters and other monomers.

The methacrylic ester polymer that can be used in the surface layer of the present invention is preferably a methacrylic ester copolymer, and more preferably a methacrylic ester copolymer not containing a rubber component. In addition, the methacrylic ester polymer that can be used in the back layer of the present invention described below is preferably a methacrylic ester copolymer, and more preferably a methacrylic ester copolymer containing a rubber component.

The methacrylic ester is not particularly limited, and examples thereof include methyl methacrylate, ethyl methacrylate, propyl methacrylate, butyl methacrylate, pentyl methacrylate, hexyl methacrylate, and the like, and it is preferable to use at least methyl methacrylate.

In addition, an alkyl group of an alkyl ester moiety of the methacrylic ester may be any of a linear alkyl group, a branched-chain alkyl group, and a cyclic alkyl group, and a linear alkyl group or a branched-chain alkyl group is preferable. The number of carbon atoms of the alkyl group is preferably 1 to 8, more preferably 1 to 4, and even more preferably 1 to 2.

One type or two or more types selected from the group consisting of the methacrylic ester monomers can be used.

The other monomers copolymerizable with methacrylic ester are not particularly limited, and examples thereof include acrylic ester, an acrylic acid, a methacrylic acid, styrene, $\alpha$-methyl styrene, acrylonitrile, other ethylenically unsaturated monomers, and the like. One type or two or more types selected from the group consisting of the monomers can be used.

In addition, the acrylic ester is not particularly limited, and examples thereof include methyl acrylate, ethyl acrylate, propyl acrylate, butyl acrylate (for example, n-butyl or the like), pentyl acrylate, hexyl acrylate, and the like. As an alkyl group of an alkyl ester moiety of the acrylic ester, the same alkyl group as that of the methacrylic ester is also suitable. One type or two or more types selected from the group consisting of the acrylic ester monomers can be used.

Since among the above, the methacrylic ester copolymer is preferably a methacrylic ester copolymer of methacrylic ester having 1 to 4 carbon atoms and acrylic ester having 1 to 8 carbon atoms, the bleedout resistance, the discoloration resistance, and the ultraviolet cutting properties of the vinylidene fluoride resin multilayer film can be more excellent. Among the methacrylic esters, one type, two types, or three types selected from the group consisting of methyl methacrylate, ethyl methacrylate, and propyl methacrylate are preferably used, and one type of methyl methacrylate is more preferably used.

The methacrylic ester copolymer that can be used in the surface layer of the present invention is more preferably a methacrylic ester copolymer of methyl methacrylate and acrylic ester having 1 to 8 carbon atoms. The methacrylic ester copolymer is even more preferably a methyl methacrylate copolymer containing butyl acrylate or methyl acrylate as a comonomer. Accordingly, the bleedout resistance, the discoloration resistance, and the ultraviolet cutting properties of the vinylidene fluoride resin multilayer film can be more excellent.

Note that, herein, in methacrylic ester and acrylic ester, for example, "1 to 4 carbon atoms", "1 to 8 carbon atoms", or the like of methacrylic ester having 1 to 4 carbon atoms, acrylic ester having 1 to 8 carbon atoms, or the like indicates the number of carbon atoms of the alkyl group of the alkyl ester moiety.

<1-1-4. Properties of Surface Layer of Present Invention>

In addition, it is preferable that the crystallinity of the surface layer is 45% or more. Accordingly, the oxidation of the methacrylic ester resin of the back layer can be reduced, and the discoloration of the film can be suppressed. In addition, accordingly, the bleedout resistance, the discoloration resistance, and the ultraviolet cutting properties of the vinylidene fluoride resin multilayer film can be more excellent.

Note that, the crystallinity can be calculated from an X-ray diffraction profile by using an X-ray diffractometer.

In addition, it is preferable that a ratio of $\alpha$ crystals to total crystal components of the vinylidene fluoride resin is 60% or more. In a case where the ratio of the $\alpha$ crystals is 60% or more, the oxidation of the methacrylic ester resin of the back layer can be reduced, the discoloration of the film can be suppressed, and the infiltration of acidic rain into the back layer is easily prevented. As a result of combining the crystallinity of the surface layer and a high ratio of the $\alpha$ crystals, the bleedout resistance, the discoloration resistance, and the ultraviolet cutting properties of the vinylidene fluoride resin multilayer film can be more excellent.

A peak intensity ratio of the $\alpha$ crystals is calculated as follows by a method described in a method of HANADA et al. (HANADA Tomomi, ANDO Yutaka, "Crystallization of Polyvinylidene Fluoride in Blend System of Polyvinylidene Fluoride, Polyvinyl Acetate, and Polymethyl Methacrylate", Tokyo Kasei Gakuin University Bulletin, July, 1992, No. 32, pp. 5-12) as a method for measuring the peak intensity ratio.

That is, since absorption properties of $\beta$ crystals of the polyvinylidene fluoride resin in an infrared absorption spectrum are at a wave number of 840 $cm^{-1}$, and absorption properties of the $\alpha$ crystals are at a wave number of 765 $cm^{-1}$, a component ratio (%) of the $\alpha$ crystals is expressed by ((Absorption Intensity at 765 $cm^{-1}$)/(Absorption Intensity at 765 $cm^{-1}$ + Absorption Intensity at 840 $cm^{-1}$)) $\times$ 100(%).

Accordingly, when a peak height at 840 $cm^{-1}$ is set to (A) and a peak height at 765 $cm^{-1}$ is set to (B), in a measurement chart of the infrared absorption spectrum, the peak intensity ratio of the $\alpha$ crystals is expressed by (B)/((A) + (B)) $\times$ 100. In a preferred embodiment of the present invention, the film is formed such that the value of the peak intensity ratio is preferably 60% or more, more preferably 70% or more, and even more preferably 70 to 90%. Accordingly, the bleedout resistance, the discoloration resistance, and the ultraviolet cutting properties of the vinylidene fluoride resin multilayer film can be more excellent.

Note that, the resin component in the present invention is not identical to the resin component in the method of HANADA et al., but since there is no change in the absorption properties of the crystals in the infrared absorption spectrum, the relational expression described above can be directly used in a composition system of the present invention.
In addition, the thickness of the surface layer is preferably 10 μm or more, and more preferably 15 μm or more, as a lower limit value, is preferably 200 μm or less, and more preferably 100 μm or less, as an upper limit value, and is preferably 10 to 200 μm, and more preferably 15 to 150 μm. Accordingly, the bleedout resistance, the discoloration resistance, and the ultraviolet cutting properties of the vinylidene fluoride resin multilayer film can be more excellent.
In addition, it is preferable that the thickness of the surface layer is 100 μm or less not only in terms of handleability as a film for an automobile exterior, but also in terms of suppressing the cost of the vinylidene fluoride resin.

<1-2. Back Layer>

<1-2-1. Methacrylic-Rich Resin Layer of Back Layer>

The back layer is a methacrylic-rich resin layer containing greater than 80% by mass of the methacrylic ester resin, on the basis of the total amount (100% by mass) of the resin components of the back layer. The methacrylic-rich resin layer contains preferably 85% by mass or more of the methacrylic ester resin, more preferably 90% by mass or more of the methacrylic ester resin, even more preferably 95% by mass or more of the methacrylic ester resin, still even more preferably 98% by mass or more of the methacrylic ester resin, and yet still even more preferably 100% by mass of the methacrylic ester resin.
In addition, the back layer is a methacrylic-rich resin layer that may contain less than 20% by mass of the vinylidene fluoride resin on the basis of the total amount of the resin components of the back layer but is not limited thereto. The content of the vinylidene fluoride resin in the methacrylic-rich resin layer is preferably 15% by mass or less, more preferably 10% by mass or less, even more preferably 5% by mass or less, and still even more preferably 2% by mass or less.
The composition of the resin component to be contained in the back layer is preferably 90% by mass or more of the methacrylic ester resin and 10% by mass or less of the vinylidene fluoride resin, and more preferably 95% by mass or more of the methacrylic ester resin and 5% by mass or less of the vinylidene fluoride resin, on the basis of the total amount of the resin components of the back layer.
It is preferable that the total amount of the vinylidene fluoride resin and the methacrylic ester resin in the back layer is 100% by mass on the basis of the total amount of the resin components of the back layer.
The back layer is more preferably a methacrylic-rich resin layer substantially composed of the methacrylic ester resin, and even more preferably a methacrylic-rich resin layer containing 100% by mass of the methacrylic ester resin on the basis of the total amount of the resin components of the back layer. "Substantially" indicates that the vinylidene fluoride resin can be contained within the range not impairing the effects of the present invention, and for example, approximately 0.5% by mass or less of the vinylidene fluoride resin may be contained.
By containing the methacrylic ester resin in the back layer at a higher content, in the present invention, the bleedout resistance, the discoloration resistance, and the ultraviolet cutting properties of the vinylidene fluoride resin multilayer film can be more excellent.
In a case where a decorative layer is laminated on the back layer, a hindered amine light stabilizer to be contained in the decorative layer may be transferred to the back layer, and a polyene structure may be formed in the skeleton of a small amount of vinylidene fluoride resin contained in the back layer by the hindered amine light stabilizer. The polyene structure absorbs light, thereby making the film look yellow. In this regard, it is preferable that the back layer is a methacrylic-rich resin layer by decreasing the vinylidene fluoride resin.

<1-2-2. Vinylidene Fluoride Resin and Methacrylic Ester Resin Used in Back Layer of Present Invention>

Each composition or the like of the methacrylic ester resin and the vinylidene fluoride resin used in the back layer of the present invention is as described above in <Vinylidene Fluoride Resin Used in Surface Layer of Present Invention> and <Methacrylic Ester Resin Used in Surface Layer of Present Invention>.
Note that, the methacrylic ester copolymer that can be used in the back layer of the present invention is more preferably a methacrylic ester copolymer of methyl methacrylate and acrylic ester having 1 to 8 carbon atoms. The methacrylic ester copolymer is even more preferably a methyl methacrylate copolymer containing butyl acrylate or methyl acrylate as a comonomer. Accordingly, the bleedout resistance, the discoloration resistance, and the ultraviolet cutting properties of the vinylidene fluoride resin multilayer film can be more excellent.

<1-2-3. Ultraviolet Absorber to be Contained in Back Layer>

In the present invention, the methacrylic-rich resin layer that is the back layer contains less than 3.5 parts by mass of a triazine ultraviolet absorber having a molecular weight of 500 or more with respect to 100 parts by mass of the resin component. Accordingly, the bleedout resistance, the discoloration resistance, and the ultraviolet cutting properties of the vinylidene fluoride resin multilayer film can be more excellent. The ultraviolet absorber is less than 3.5 parts by mass from the viewpoint that the transparency of the vinylidene fluoride resin multilayer film is not impaired and the surface of the film is less likely to be contaminated by the bleedout.

Further, the content of the triazine ultraviolet absorber is 3.5 parts by mass or less, and preferably 3 parts by mass or less, as an upper limit value, and is preferably 0.01 parts by mass or more, more preferably 0.05 parts by mass or more, even more preferably 0.1 parts by mass or more, still even more preferably 0.5 parts by mass or more, and particularly preferably 1 part by mass or more, as a lower limit value, with respect to 100 parts by mass of the total resin components of the methacrylic-rich resin layer. Such a numerical range is more preferably 0.5 to 3.5 parts by mass. Accordingly, the bleedout resistance, the discoloration resistance, and the ultraviolet cutting properties of the vinylidene fluoride resin multilayer film can be more excellent.

The triazine used is selected between the next following triazine compounds : 2-[4,6-di(4-biphenylyl)-1,3,5-triazine-2-yl]-5-(2-ethylhexyloxy) phenol;

2,4-bis(2,4-dimethylphenyl)-6-(2-hydroxy-4-n- octyloxyphenyl) -1,3,5-triazine;
and 2,4,6-tris(2-hydroxy-4-hexyloxy-3-methylphenyl)- 1,3,5-triazine.

All other triazines mentioned in the description are only for comparison purpose. In the present invention, the ultraviolet absorber is used in the back layer in terms of the continuousness of an ultraviolet ray absorption effect, and since the ultraviolet absorber of the present invention is a triazine compound having at least a molecular weight of 500 or more, the bleedout resistance, the discoloration resistance, and the ultraviolet cutting properties of the vinylidene fluoride resin multilayer film can be more excellent.

An upper limit value of the molecular weight of the triazine compound is preferably 5000 or less, is more preferably 3000 or less, even more preferably 2000 or less, still even more preferably 1000 or less, particularly preferably 900 or less, extremely preferably 800 or less, and most preferably 700 or less, and a lower limit value thereof is preferably 510 or more, more preferably 550 or more, even more preferably 600 or more, and still even more preferably 605 or more. The range of the molecular weight is preferably 500 to 2000, more preferably 500 to 1000, and even more preferably 510 to 700. Accordingly, the bleedout resistance, the discoloration resistance, and the ultraviolet cutting properties of the vinylidene fluoride resin multilayer film can be more excellent.

Note that, the molecular weight of the triazine compound can be measured by GC-TOFMS analysis, and the triazine compound can be identified by IR analysis or NMR analysis.

The triazine compound indicates a compound having at least a triazine skeleton, is preferably a compound having a 1,3,5-triazine skeleton, and more preferably a compound having a 2-(2-hydroxyphenyl)-1,3,5-triazine skeleton.

The triazine compound is even more preferably a compound having a triazine skeleton represented by Formula (1) described below.

[Formula 1]

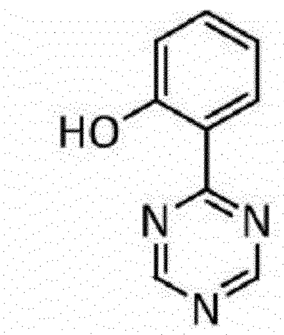

(1)

Formula (1) described above represents a main skeleton of a preferred triazine compound of the present invention, and also indicates a 2-(2-hydroxyphenyl)-1,3,5-triazine compound that may have a substituent.

It is preferable to have a 2-hydroxyphenyl group at a 2-position of the triazine compound of Formula (1) described above. It is preferable that the 2-hydroxyphenyl group has at least an alkoxy group having C1 to 18 that may have a substituent, and in such a case, it is preferable that the alkoxy group is bonded to a 4-position of the 2-hydroxyphenyl group. The alkoxy group having C1 to 18 may have a substituent, or may be an unsubstituted group. In addition, the 2-hydroxyphenyl group may have a singular or a plurality of substituents (for example, a methyl group and the like) other than the alkoxy group having C1 to 18.

The alkoxy group of the 2-hydroxyphenyl group is not particularly limited, and examples thereof include a 2-ethyl hexanoyloxy group, a n-octyl oxy group, a n-hexyl oxy group, a (2-hydroxy-3-dodecyloxypropyl) oxy group, a (2-hydroxy-3-dodecyloxypropyl) oxy group, a (2-hydroxy-3-tridecyloxypropyl) oxy group, a 2-hydroxy-4-iso-octyl oxy group, and the like, and one type or two or more types selected from the group consisting of the above can be used.

It is preferable to have the same or different aryl groups that may have a substituent at a 4-position and a 6-position of the triazine compound of Formula (1) described above, and it is preferable that the aryl groups are the same. The number of substituents of the aryl groups at the 4-position and the 6-position may be any of 0, 1, 2, 3, 4, and 5, and in a case of 0, it is an unsubstituted aryl group. Note that, the aryl group may be either a monocyclic aromatic hydrocarbon group or a polycyclic aromatic hydrocarbon group, and a monocyclic aromatic hydrocarbon group (preferably, a phenyl group) is preferable.

The substituent in Formula (1) described above is preferably a hydroxyl group, a halogen atom, and a substituted or unsubstituted monovalent to divalent organic group, and among them, a hydroxyl group and a substituted or unsubstituted monovalent organic group is more preferable. One type, two types, or three or more types selected from the group consisting of the substituents are preferable.

In a case where an alkyl group moiety (an unsubstituted alkyl group moiety or a substituted alkyl group moiety (for example, an ethylene group moiety)) is in the organic group of the triazine compound of the present invention, the alkyl group moiety may be any of a linear alkyl group moiety, a branched-chain alkyl group moiety, and a cyclic alkyl group moiety, and a linear alkyl group moiety or a branched-chain alkyl group moiety is preferable. In addition, it is preferable that the alkyl group moiety of the organic group has C1 to 18, and examples thereof include a methyl group, an ethyl group, a propyl group, a butyl group, an isobutyl group, a pentyl group, a hexyl group, a heptyl group, an octyl group, a nonyl group, a decyl group, and the like, but the alkyl group moiety is not limited thereto, and one type or two or more types selected from the group consisting of the above can be used.

Among the organic groups described above, a substituted or unsubstituted alkyl group having C1 to 18, a substituted or unsubstituted alkoxy group having C1 to 18, a substituted or unsubstituted aryl group having C5 to 18 (preferably, a phenyl group), or a substituted or unsubstituted acyl oxy group having C1 to 18 is preferable, and one type, two types, or three or more types selected from the group consisting of the organic groups are preferable.

In addition, the aryl group (preferably, a phenyl group) at the 4-position and the 6-position in Formula (1) described above may be unsubstituted, or may have a substituent. In a case where the aryl group has a substituent, it is preferable that the substituent is a hydroxyl group or a substituted or unsubstituted monovalent organic group. One type, two types, or three or more types selected from the group consisting of the above are preferable.

The phenyl group that is bonded to the 4-position or the 6-position of the triazine compound may be either a substituent or an unsubstituted group, the substituent is not particularly limited, and examples thereof include a phenyl group, a hydroxyl group, a methyl group, a hexyl oxy group, and the like, and one type, two types, or three or more types selected from the group consisting of the above are preferable. At this time, in a case of selecting a methyl group, it may be dimethyl having two methyl groups.

The triazine compound of the present invention is more preferably a 2-(2-hydroxyphenyl)-4,6-diphenyl-1,3,5-triazine compound represented by Formula (2) described below, and the compound may have a substituent.

[Formula 2]

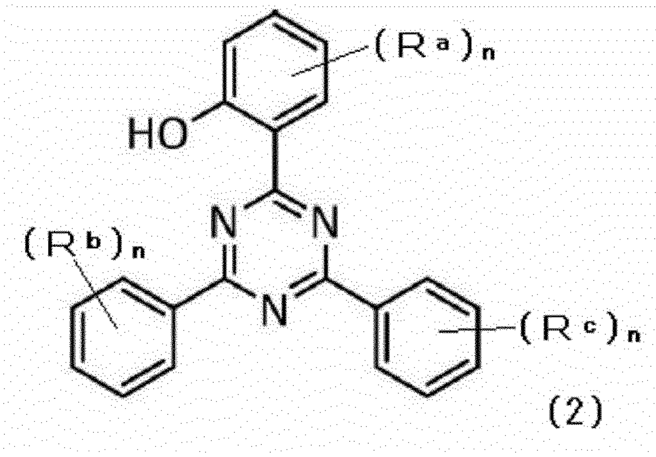

(2)

In Formula (2) described above, n of $(R^a)_n$ (the number of substituents) is the same or different, and is any of 1, 2, 3, and 4, preferably any of 1 to 3, and more preferably 1 or 2. In addition, in Formula (2) described above, n of $(R^b)_n$ and $(R^c)_n$ (the number of substituents) is the same or different, and is any of 0, 1, 2, 3, 4, and 5, preferably any of 0 to 3, and more preferably any of 1 to 3. Note that, in a case where n of $(R^b)_n$ and $(R^c)_n$ is 0, it is an unsubstituted phenyl group.

In Formula (2) described above, $R^a$, $R^b$, and $R^c$ are the same or different, and are a hydroxyl group, a halogen atom, and a substituted or unsubstituted monovalent or divalent organic group, and among such substituents, a hydroxyl group and a substituted or unsubstituted monovalent organic group are more preferable, and one type or two or more types selected from the group consisting of the substituents are preferable.

Among the organic groups of $R^a$, $R^b$, and $R^c$ in Formula (2) described above, a substituted or unsubstituted alkyl group having C1 to 18, a substituted or unsubstituted alkoxy group having C1 to 18, a substituted or unsubstituted aryl group having C5 to 18, or a substituted or unsubstituted acyl oxy group having C1 to 18 is preferable.

The acyl oxy group is represented by RCOO-, R is preferably an alkyl group, and examples thereof include an ethyl hexanoyl oxy group.

$R^a$ in Formula (2) described above is preferably an alkoxy group having C1 to 18 and an alkyl group having C1 to 3 (preferably, a methyl group), and more preferably at least an alkoxy group having C1 to 18, and it is preferable that the alkoxy group having C1 to 18 has a 2-hydroxyphenyl group at a 4-position.

$R^b$ and $R^c$ in Formula (2) described above are preferably a hydroxyl group and a substituted or unsubstituted monovalent organic group, and among the organic groups, an alkyl group having C1 to 18 (more preferably, C1 to 3), an alkoxy group having C1 to 18 (more preferably, C3 to 18), or a phenyl group having C6 to 18 is preferable. $R^b$ and $R^c$ are one type or two or more types selected from the group consisting of the substituents. The substituents of $R^b$ and $R^c$ may be the same or different, and there may be a singular or a plurality of substituents. For example, the substituent may be two methyl groups. For example, the substituent may be one unsubstituted phenyl group. For example, the substituent may be one hydroxyl group, one methyl group, and one hexyl oxy group.

In Formula (2) described above, it is preferable that $R^b$ and $R^c$ are the same.

Examples of the triazine compound include (a) 2-(4,6-diphenyl-1,3,5-triazin-2-yl)-5-[2-(2-ethylhexanoyloxy)ethoxy]ph enol (Mw512) (for example, ADEKA STAB LA-46), (b) 2,4-bis(2,4-dimethylphenyl)-6-(2-hydroxy-4-n-octyloxyphenyl)-1,3,5-tri azine (Mw510) (for example, KEMISORB 102), 2,4,6-tris(2-hydroxy-4-hexyloxy-3-methylphenyl)-1,3,5-triazine (Mw700) (for example, ADEKA STAB LA-F70), and one type or two or more types selected from the group consisting of the above can be used.

A method for synthesizing the triazine compound is not particularly limited, and a synthesis method that is generally used in the synthesis of a compound having a triazine structure can be applied (for example, Reference Literature 1: Japanese Unexamined Patent Publication No. 2004-160883, Reference Literature 2: Japanese Unexamined Patent Publication No. 2010-270336, Reference Literature 3: Japanese Translation of PCT International Application Publication No. H11-503112, and the like). Examples of the synthesis method include a method for performing an addition reaction of a desired derivative such as a phenol derivative or a resorcinol (1,3-dihydroxybenzene) derivative with respect to cyanuric chloride (a structure in which 1,3,5-triazine is chlorinated) by using aluminum trichloride. Each of the substituents may be introduced after the compound having a 1,3,5-triazine skeleton is formed or introduced to a phenol derivative or a resorcinol derivative before the compound having a 1,3,5-triazine skeleton is formed. In addition, for example, a desired substituent may be further introduced to a compound obtained by 2-(4-biphenyl)-4H-1,3-benzoxazin-4-one and benzamidine hydrochloride or 4-biphenyl amidine hydrochloride.

<1-3. Multilayer Film Including Two Layers in Which Back Layer (Methacrylic-Rich Resin Layer) and Surface Layer (Fluorine-Rich Resin Layer) Are Laminated>

The vinylidene fluoride resin multilayer film of the present invention is a multilayer film including at least two layers in which the back layer (the methacrylic-rich resin layer) and the surface layer (the fluorine-rich resin layer) are laminated.

The thickness of the back layer is not particularly limited, and is preferably 10 to 180 μm, and more preferably 15 to 150 μm, from the viewpoint of a cost reduction or film strength, and an upper limit value of the thickness of the back layer is preferably 100 μm or less, and more preferably 50 μm or less, from the viewpoint of the cost reduction or flexible conformableness with respect to the shape of a component.

The total thickness including the surface layer and the back layer is not particularly limited, and is preferably 20 to 200 μm, and more preferably 30 to 200 μm, from the viewpoint of the cost reduction and the film strength. Further, an upper limit value of the total thickness including the surface layer and the back layer is more preferably 150 μm or less, and even more preferably 100 μm or less, from the viewpoint of the cost reduction or the flexible conformableness with respect to the shape of the component.

Here, other layers may be further laminated on the surface layer and/or the back layer. The other layers, for example, are a decorative layer, a protective layer, a pressure-sensitive adhesive layer, a printing layer, a metal-evaporated layer, and the like, but are not particularly limited. The total thickness also including such layers is preferably 20 to 500 μm (more preferably 400 to 500 μm), and for example, in a case of three layers of the surface layer, the back layer, and the decorative layer, it is preferable that the total thickness is 20 to 200 μm (more preferably 30 to 200 μm) in terms of adhesion operability with respect to automobile exterior and interior components or a cost.

Note that, the vinylidene fluoride resin multilayer film of the present invention may have a two-layer structure composed of the back layer and the surface layer, and such a two-layer structure film is also referred to as a "single vinylidene fluoride resin film" or a "single film of the present invention".

In addition, in a case where at least the decorative layer is laminated on the surface layer and/or the back layer, the vinylidene fluoride resin multilayer film of the present invention is also referred to as a "decorative film". The pressure-sensitive adhesive layer for adhesion with respect to a component or the like may be laminated on the decorative film.

For example, an acrylic resin, a polycarbonate resin, a vinyl chloride resin, a polyester resin, a resin composition containing such resins as a component, and the like can be used in the decorative layer. In addition, additives such as a pigment can also be suitably added.

Since a polyester resin has excellent surface gloss and is excellent in printability, the polyester resin can be used in a panel component of an automobile, a mobile phone, or the like by being subjected to plating or metallic tone printing.

Since an acrylic resin sheet is excellent in weather resistance and adhesiveness with respect to an acrylonitrile-butadiene-styrene copolymer resin, the acrylic resin sheet is suitable for surface decoration of a molded body containing the resin as a base material.

Since a vinyl chloride resin sheet has a high tensile elongation during heating and moldability for following a shape having a high deep drawing degree, the vinyl chloride resin sheet can be preferably used in surface decoration of a molded body having a complicated shape by being laminated with the vinylidene fluoride resin multilayer film of the present invention.

The decorative layer may contain a hindered amine light stabilizer (HALS or the like), and HALS is a basic substance for preventing degradation due to light. According to the vinylidene fluoride resin multilayer film of the present invention, since even in a case where HALS in the decorative layer is transferred to the back layer and further reaches the surface layer, the crystallinity of the surface layer can be 45% or more and the ratio of the α crystals can be 60% or more, the generation of the polyene structure can be suppressed and the discoloration can be suppressed for a long period of time.

Note that, any other additive components in addition to the ultraviolet absorber can also be blended in the surface layer and/or back layer, within the range not impairing the effects of the present invention. For example, a pigment, a filler, a stabilizer, a dispersant, an oxidant inhibitor, a delusterant, a surfactant, an antistatic agent, a fluorine surface modifier, a processing aid, and the like can be added.

In addition, it is possible to perform multilayering with films such as isotactic or syndiotactic polypropylene, high-density polyethylene, low-density polyethylene, polystyrene, polyethylene terephthalate, and an ethylene-vinyl acetate copolymer (EVA), as layers other than the decorative layer, and to also perform various decoration treatments such as emboss molding.

<1-4. Properties of Vinylidene Fluoride Resin Multilayer Film>

[1-4-1. Transparency of Vinylidene Fluoride Resin Multilayer Film]

It is preferable that the single vinylidene fluoride resin film of the present invention is applied to the decorative film since the single vinylidene fluoride resin film is excellent in the transparency. The transparency can be expressed by HAZE, and HAZE of the present invention is a value obtained by measuring the single vinylidene fluoride resin film.
HAZE of the vinylidene fluoride resin multilayer film of the present invention is preferably 15% or less, more preferably less than 10%, even more preferably 2% or less, and still even more preferably 1.7% or less. In addition, a total light transmittance of the vinylidene fluoride resin multilayer film is preferably 70% or more, more preferably 80% or more, and even more preferably 90% or more.
Note that, the total light transmittance and HAZE can be measured on the basis of JISK-7361-1 and JISK-7136, in the following conditions.

Sample: One Sample Sheet
Device: HAZE METER NDH5000 (manufactured by NIPPON DENSHOKU INDUSTRIES CO., LTD.)

[1-4-2. Ultraviolet Cutting Capability of Vinylidene Fluoride Resin Multilayer Film]

The vinylidene fluoride resin multilayer film of the present invention has excellent ultraviolet cutting properties, thereby having excellent base protectiveness.
A weather resistance accelerating test is performed by laminating the vinylidene fluoride resin multilayer film of the present invention on the decorative layer to be a base and by applying an ultraviolet ray, and a change $\Delta b$ in the degree of yellowness of the sample before and after the test can be evaluated. The details will be described in Examples.
The discoloration can be prevented by the vinylidene fluoride resin multilayer film of the present invention containing the ultraviolet absorber.

[1-4-3. Discoloration Resistance to Temperature Change of Vinylidene Fluoride Resin Multilayer Film]

Since the vinylidene fluoride resin multilayer film of the present invention is less likely to be discolored even in a case where there is a cyclic temperature change of cold heat, the vinylidene fluoride resin multilayer film is excellent in the discoloration resistance to a temperature change.
A single vinylidene fluoride resin film of the related art may be whitened in accordance with a temperature change. However, the single vinylidene fluoride resin film of the present invention is excellent in whitening resistance to a temperature change. Accordingly, in a case where the decorative layer is laminated on the single film of the present invention, the decorative film has excellent discoloration resistance to a temperature change. For example, in a case of the decorative film of the present invention including a red-colored decorative layer, there is an advantage that the film is less likely to be discolored to a pink color or a light red color in accordance with a time-dependent change.
The discoloration resistance of the present invention can be expressed by $\Delta E$, and $\Delta E$ is preferably 3.0 or less, more preferably 2.5 or less, and even more preferably 2.0 or less. $\Delta E$ of the present invention will be described below, and is a value obtained by laminating a specific decorative layer on the single vinylidene fluoride resin film of the present invention and by measuring the decorative film.

[1-4-4. Bleedout Resistance to Temperature Change of Vinylidene Fluoride Resin Multilayer Film]

The vinylidene fluoride resin multilayer film of the present invention has excellent bleedout resistance to a temperature change. The single vinylidene fluoride resin film of the present invention has excellent bleedout resistance to a temperature change. Accordingly, it is possible to prevent powder-shaped foreign substances from being precipitated or attached onto the surface of the surface layer or the back layer of the single film of the present invention.
The evaluation for the bleedout resistance of the present invention will be described in detail in Examples, and whether or not a predetermined amount or more of the powder-shaped foreign substances are precipitated on the surface of the back layer is observed with a laser microscope after performing predetermined thermal cycle with respect to the single vinylidene fluoride resin film. In a case where the predetermined amount or more of the powder-shaped foreign substances are within a predetermined area range, it is evaluated that there is bleedout, and in a case where less than the predetermined amount of the powder-shaped foreign substances are within the predetermined area range, it is evaluated that there is no bleedout. In a case where it is evaluated that there is no bleedout, it is determined that there is the bleedout resistance to a temperature change in the present invention.

[1-4-5. Melt Mass Flow Rate of Surface Layer and Back Layer]

An absolute value of a difference in melt mass flow rates (hereinafter, may be referred to as "MFR") of the surface layer and the back layer of the vinylidene fluoride resin multilayer film of the present invention, which are measured by applying a load of 2.16 kgf at 240°C, is preferably 0.5 to 5.0 g/10 min, and more preferably 1.0 to 2.0 g/10 min. Alternatively, MFRs of the surface layer and the back layer are 0.5 to 25.0 g/10 min, and preferably 0.5 to 25.0 g/10 min, respectively, but are not particularly limited.
It is preferable that the absolute value of the difference in MFRs of the surface layer and the back layer is 0.5 to 5.0 g/10 min since the interface between both layers becomes smooth when laminating the both layers and poor appearance such as melt fracture is less likely to occur. In addition, it is more preferable that the absolute value is 1.0 to 2.0 g/10 min since the melt fracture is less likely to occur and a layer configuration is easily uniformized over the total film width.
MFR can be evaluated by a standard test method of a melt mass flow rate (MFR) of thermoplastic plastic in JIS K7210-1 of Japanese Industrial Standards.

[2. Method for Manufacturing Vinylidene Fluoride Resin Multilayer Film of Present Invention]

A method for manufacturing the vinylidene fluoride resin multilayer film of the present invention is not particularly limited, and the vinylidene fluoride resin multilayer film can be simply manufactured by a melt extrusion molding method that has been used from the related art.
Specifically, examples of the method include a T-die method for manufacturing a film by using a T-type die, and a method for manufacturing a film by using an inflation die, and extrusion conditions are not particularly limited, and conditions that can be generally used to mold the vinylidene fluoride resin multilayer film can be used.
In the T-die method, either a method for manufacturing a film by arranging a metal cooling roll and a rubber roll under a T-type die, and by pinching a melt resin to be extruded from a lip opening of the T-type die between the rolls while cooling and solidifying the melt resin, or a method for manufacturing a film by cooling and solidifying the melt resin with only the metal cooling roll without using a pinch roll can be adopted. In any case, it is preferable that the amount of conversive heat per unit time when cooling the melt resin is 70 to 180 kW per 1 kg of the melt resin by a computation expression expressed by the following expression.

Amount of Conversive Heat = Specific Heat (J/kg·°C) of Resin Composition $\times$ $\Delta$T/Cooling Time (sec)

Here, $\Delta$T = Melt Resin Temperature - Temperature after Cooling.
For example, it is preferable that the amount of conversive heat per 1 kg of the melt resin when the resin composition used in the vinylidene fluoride resin multilayer film of the present invention is melted at 230°C and cooled to 60°C after 2 seconds is 94 kW. In a case where the amount of conversive heat is less than 70 kW, mold releasability from the cooling roll may be degraded due to insufficient cooling, and in a case where the amount of conversive heat is greater than 180 kW, the vinylidene fluoride resin multilayer film of the present invention having a crystalline structure is not capable of being obtained. The extruded film may have a thickness of preferably 30 to 100 $\mu$m in a state of being cooled and solidified.

[3. Decorative Film, Automobile Interior/Exterior Film, and Automobile or Automobile Component Using Same]

The vinylidene fluoride resin multilayer film of the present invention is excellent in the bleedout resistance to a temperature change, the discoloration resistance to a temperature change, and the ultraviolet cutting properties. Accordingly, it is preferable that the vinylidene fluoride resin multilayer film is laminated on the decorative layer. By laminating the decorative layer, it is possible to provide a decorative film excellent in a decoration effect.
In addition, by using the vinylidene fluoride resin multilayer film of the present invention, it is possible to provide a film for automobile interior/exterior component, and an automobile or an automobile interior/exterior component using the same.
For example, by applying the vinylidene fluoride resin multilayer film of the present invention to the exterior film, it is possible to further impart scratch resistance, water repellency, and the like in a case of laminating a protective layer or the like on the surface layer. In addition, since the automobile interior/exterior film is also excellent in the handleability, the automobile interior/exterior film can be used not only in a large component such as a hood or a roof, but also in a small component such as an internal holder, a panel, or a gauge.
In addition, the automobile interior/exterior component to which the present invention is applied, for example, is an instrument panel component, a console component, or a pillar component of an automobile interior, or a side mirror

cover or a bumper of an automobile exterior, but is not limited thereto.

Note that, a single vinylidene fluoride resin film 1 illustrated in FIG. 1 is composed of a surface layer 2 and a back layer 3, and is a minimum unit of the vinylidene fluoride resin multilayer film of the present invention. In addition, in the vinylidene fluoride resin multilayer film of the present invention, the surface layer 2, the back layer 3, and a decorative layer 4 are sequentially laminated such that a vinylidene fluoride resin multilayer film laminated on a decorative layer can be obtained. As described above, in a case of including the decorative layer 4, the vinylidene fluoride resin multilayer film is also referred to as a decorative film in the present invention.

In addition, the back layer 3 of the vinylidene fluoride resin multilayer film may contain approximately 0.1% by mass (for example, 0.05 to 0.2% by mass) of a phenolic oxidant inhibitor as an antioxidant agent.

In the vinylidene fluoride resin multilayer film of FIG. 1, the same structure as that used in the evaluation method described above may be used as the decorative layer 4, but the decorative layer 4 is not particularly limited. For example, the decorative layer 4 may be a white vinyl chloride sheet. The white vinyl chloride sheet contains DEHA (bis(2-ethylhexyl) adipate), DEHP (bis(2-ethylhexyl) phthalate), 2-hydroxy-4-n-octyl oxybenzophenone, and DINP (diisononyl phthalate), and may contain approximately 0.5% by mass (for example, 0.1 to 1% by mass) of HALS.

It is preferable to use a pressure-sensitive adhesive layer 5 of the vinylidene fluoride resin multilayer film of FIG. 1 in order to adhesively join the single film or the decorative film of the present invention to an automobile, an automobile component (for example, an automobile interior/exterior component or the like), or the like. The same structure as that used in the evaluation method of the present invention may be used as the pressure-sensitive adhesive layer 5, and it is preferable that the pressure-sensitive adhesive layer 5 is composed of an acrylic pressure-sensitive adhesive agent, but the pressure-sensitive adhesive layer 5 is not particularly limited.

In addition, in the vinylidene fluoride resin multilayer film of FIG. 1, a reference numeral 11 may be an iron plate 11 or an ABS resin plate 11, but is not particularly limited.

In addition, FIG. 1 can be an example of a partial sectional view of an automobile or an automobile component using the vinylidene fluoride resin multilayer film of the present invention, but the present invention is not limited thereto.

## Examples

Hereinafter, the present technology will be described in more detail on the basis of Examples and the like. Note that, Examples and the like described below indicate an example of representative examples and the like of the present invention, except example 5 which is not part of the invention, but the scope of the present invention is not narrowly construed thereby.

<Raw Material>

Raw materials used in this Examples and Comparative Examples are described below and also shown in Tables 1 and 2.

(Fluorine Resin)

· 1000HD: Polyvinylidene Fluoride Kynar "1000HD", manufactured by Arkema S.A.
· K720: Polyvinylidene Fluoride Kynar "K720", manufactured by Arkema S.A.

(Methacrylic Ester Resin)

· MGSS: Polymethyl Methacrylate (PMMA) SUMIPEX "MGSS", manufactured by Sumitomo Chemical Company, Limited
· HBS000: Methacrylic Ester Resin HIPET "HBS000", manufactured by Mitsubishi Chemical Corporation

(Ultraviolet Absorber)

· Triazine Ultraviolet Absorber: Tinuvin 1577ED (Mw426): Triazine Ultraviolet Absorber "Tinuvin 1577ED": 2-(4,6-Diphenyl-1,3,5-Triazin-2-Yl)-5- [(Hexyl)Oxy] -Phenol, manufactured by BASF Japan Ltd.

· Triazine Ultraviolet Absorber: Compound A (Mw606): 2-[4,6-Di(4-Biphenylyl)-1,3,5-Triazin-2-Y1]-5-(2-Ethylhexyloxy)Phenol (manufactured by BASF Japan Ltd.: may be Tinuvin 1600)
· Triazine Ultraviolet Absorber: Compound B (Mw510): 2,4-Bis(2,4-Dimethylphenyl)-6-(2-Hydroxy-4-N-Octyloxyphenyl)-1,3,5 -Triazine (manufactured by CHEMIPRO KASEI KAISHA, LTD.: may be KEMISORB 102)
· Triazine Ultraviolet Absorber: Compound C (Mw700): 2,4,6-Tris(2-Hydroxy-4-Hexyloxy-3-Methylphenyl)-1,3,5-Triazine (manufactured by ADEKA Corporation: may be ADEKA STAB LA-F70)

Note that, chemical structural formulas of the compound A, the compound B, the compound C are as follows. In addition, the compounds A to C can be manufactured with reference to a known method for manufacturing a triazine compound (for example, refer to Reference Literatures 1 to 3).

[Formula 3]

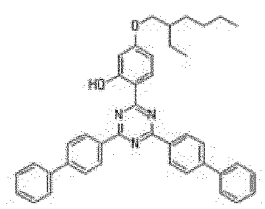

Mw606

Compound A

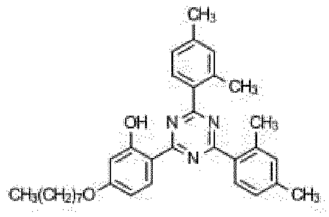

Mw510

Compound B

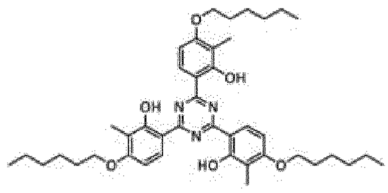

Mw700

Compound C

(3)

(PVC Resin)

· Polyvinyl Chloride (PVC) S1008C, manufactured by Kaneka Corporation

(Titanium Oxide)

· Titanium Oxide D101, manufactured by DuPont de Nemours, Inc.

<Compounding Step>

In a case of using two or more types of raw materials by mixing, each of the raw materials was preliminarily mixed in an unmelted state and melted in a melt mixing facility to be uniformly mixed. After that, the mixture was extruded into the shape of a strand, cooled, and then, cut into the shape of a pellet to be used as a raw material (refer to Tables 1 to 3).

<Melt Mixing Facility>

· "KTX30" Twin-Screw Extruder (Screw Length (L [mm])/Screw Diameter (D [mm]) = 46.8), manufactured by Kobe Steel, Ltd.
· Screw Mixing Part Configuration: A VCMT mixing part and a kneading mixing part are provided in C5 to C8 process parts in a cylinder
· Screen Mesh: Three meshes each having an opening of 0.25 mm, 0.075 mm, and 0.25 mm were used by overlapping from the screw side.

<Laminating Step>

Next, in a laminating step, each compounding was performed as described below, and a fluorine resin layer (a surface layer) and an acrylic resin layer (a back layer) were laminated to obtain a laminate film having a predetermined thickness.

Vinylidene fluoride resin multilayer films (a single film including a surface layer and a back layer) of each of this Examples and Comparative Examples were manufactured in accordance with conditions shown in Table 3.

A specific laminating step was performed as follows. That is, the raw materials obtained by the compounding step described above were sufficiently melted with the following extruders, and then, the resins of each of the extruders were laminated in a feed block, widened inside a coat hanger type T-type die, and extruded into the shape of a film. The film-shaped resin was obtained by being cooled while being taken up in an interposed state between a roll plated with hard chromium (Surface Arithmetic Average Roughness Ra = 0.2 μm) of which the temperature was adjusted and a white mirror roll immediately after being discharged downwards.

At this time, a draft ratio that is defined by a value obtained by dividing a lip opening degree indicating the width of a lip gap of the T-type die by a film thickness was 15.

Here, a surface temperature of a first cooling roll in which the resin extruded from the T-type die is cooled in contact with the roll was 50°C.

In addition, a draw ratio that is defined by a value obtained by dividing a winding speed of the film by a rotative speed of the first cooling roll was 1.1.

<Extruder A (Surface Layer Side in Multilayer Configuration)>

- · Single-Screw Extruder (LID = 25), manufactured by TANABE PLASTICS MACHINERY CO., LTD.
- · Screw Type: Full-Flight Screw

<Extruder B (Back Layer Side in Multilayer Configuration)>

- · Single-Screw Extruder (LID = 25), manufactured by Research Laboratory of Plastics Technology Co., Ltd.
- · Screw Type: Full-Flight Screw

<T-Type Die>

- · Coat Hanger Type, Width: 550 mm, Lip Opening Degree: 0.5 mm, manufactured by Sun Engineering Co., Ltd.

<Test for Discoloration Resistance to Temperature Change>

A decorative film (a vinyl chloride resin sheet having a thickness of 100 μm) having a color difference (a = 19.5, b = 35, L = 34) and the surface of the back layer of each of the single vinylidene fluoride resin films obtained in this Examples and Comparative Examples were heat-laminated to obtain each structure (a thickness of 150 μm).

The heat laminating was performed by a method in which the single vinylidene fluoride resin film and the decorative film overlapped such that the surface of the back layer of the single vinylidene fluoride resin film and the decorative film were in contact with each other, interposed between a metal roll heated to 140°C and a rubber roll, and heated and pressure-bonded by rotating each of the rolls at a speed of 1 m/min.

Each of the structures was adhered to an ABS sheet (MRON, manufactured by Morino Kako Co., Ltd.) via a base-less double-sided tape (MHM-FWV25: Thickness of 25 μm, manufactured by Nichieikako Co., Ltd.) to prepare each test sheet (a length of 50 mm × a breadth of 50 mm, a thickness of 400 to 500 μm).

The test plate was put in the environment of thermal cycle for 120 hours "(80°C × 3h → 23°C × 1h → -30°C × 3h → 23°C × 1h → 50°C × 95%RH × 15h → 23°C × 1h) × 5 Cycles" by using a low-temperature thermo-hygrostat (a low-temperature thermo-hygrostat PL-3J, manufactured by ESPEC Corp.), and a hue change ΔE before and after the input was calculated.

<Measurement of Color Difference ΔE>

An E value was calculated on the basis of JIS Z8729 by using a colormeter (ZE6000), manufactured by NIPPON DENSHOKU INDUSTRIES CO., LTD., and a value obtained by subtracting the E value before the test from the E value after the test was set to an ΔE value to be used as the evaluation for discoloration resistance (ΔE) to the thermal cycle. The ΔE value of 3 or less was set as an acceptable level.

<Test for Bleedout Resistance to Temperature Change>

Each of the single films (the single film composed of the surface layer and the back layer) of Examples and Comparative Examples was put in the environment of thermal cycle for 96 hours "(-30°C × 7h → 23°C × 1h → 80°C × 15h → 23°C × 1h) × 4 Cycles" by using a low-temperature thermo-hygrostat (a low-temperature thermo-hygrostat PL-3J, manufactured by ESPEC Corp.), and then, whether or not powder-shaped foreign substances bled out on the surface of the back layer (150 μm × 150 μm) was observed with a confocal laser microscope (VK-X110, manufactured by KEYENCE CORPORATION) at a magnification of 2000 times, and an image was visually observed to check the presence or absence of the powder-shaped foreign substances. In a case where the powder-shaped foreign substances were not observed or almost not observed within a predetermined range (150 μm × 150 μm) in the vicinity of approximately the center of the surface of the back layer, it was evaluated that there was no bleedout (acceptable), and in a case where the powder-shaped foreign substances were observed, it was evaluated that there was bleedout (unacceptable).

There is no bleedout (the number of powder-shaped foreign substances is 0): Excellent (Acceptable)
There is almost no bleedout (the number of powder-shaped foreign substances is 1 to 2): Good (Acceptable)
There is bleedout (the number of powder-shaped foreign substances is 3 or more): Unallowable (Unacceptable)

<Evaluation for Ultraviolet Cutting Properties>

The single vinylidene fluoride resin film and a decorative layer containing a PVC resin [S1008C (Product Name), manufactured by Kaneka Corporation] and titanium oxide [D101 (Product Name), manufactured by DuPont de Nemours, Inc.] overlapped such that the surface of the back layer of the single vinylidene fluoride resin film and the decorative layer were in contact with each other, interposed between a metal roll heated to 140°C and a rubber roll, and heated and pressure-bonded to prepare a structure illustrated in FIG. 2. The structure was subjected to a weather resistance accelerating test in the following conditions by using a metal weather ultraviolet irradiation tester (manufactured by DAIPLA WINTES CO., LTD.), and a change Δb in the degree of yellowness of the structure before and after the test was evaluated. Note that, FIG. 2 can be a sectional view illustrating an example of the decorative film of the present invention, but the present invention is not limited thereto.

· Conditions

Ultraviolet Irradiation Intensity: 132 mW/cm$^2$
Ultraviolet Irradiation Surface: Surface of Surface Layer of Vinylidene Fluoride Resin Multilayer Film
B. P. Temperature: 63±3°C
Humidity: 50%Rh
Irradiation/Condensation Cycle: 6 h/2 h
Test Time: 576 hours (72 cycles)

<Measurement of Change Δb in Degree of Yellowness>

A b value of the structure was calculated on the basis of JIS Z8729 by using a colormeter (ZE6000), manufactured by NIPPON DENSHOKU INDUSTRIES CO., LTD., and a value obtained by subtracting the b value before the test from the b value after the test was set to a Δb value to be used as the evaluation for ultraviolet cutting capability. The Δb value of 2.0 or less was set to an acceptable level.

<Transparency>

The single vinylidene fluoride resin film was measured on the basis of JIS K7136 by using a turbidimeter "NDH7000" (manufactured by NIPPON DENSHOKU INDUSTRIES CO., LTD.), and a HAZE value thereof was listed.

<Calculation of Crystallinity (%)>

The crystallinity of the surface layer of the single vinylidene fluoride resin film was measured with a high-power X-ray diffractometer (an X-ray diffractometer SmartLab, manufactured by Rigaku Corporation). Measurement conditions are as follows.

X-Ray Source: Cu Enclosure Pipe
Applied Voltage/Current: 40 kV/40 mA
Measurement Range: $10° \leq 2\theta \leq 50°$
Exposure Time: 20 minutes
Measurement Step: 0.02°
Scan Speed: 1°/min
Unit Configuration: CBO Unit, PB 0.3 Selective Slit
Solar Slit Open, PB Collimater Holder
$\phi$0.1 mm Pinhole Collimater
Detector: Semiconductor Detector (HyPit-3000)
Measurement Stage: 2D Transmissive Attachment

Data was converted into one-dimensional data by using XRD data analysis software 2DP (2D data processing), and a profile-fitting function of XRD data analysis software PDXL (Powder diffraction analysis) was used. After background correction was performed, a peak derived from a PVDF crystalline structure and a halo peak derived from an amorphous structure were separated in a range of $2\theta$ = 10° to 30°, and each area thereof was obtained. In Examples, since the back layer contained 90% by mass or more of the methacrylic ester resin and was substantially amorphous, the crystallinity of the surface layer was calculated by the following expression.

Ic = Peak Area Derived from PVDF Crystalline Structure
Ia = Halo Peak Area Derived from Amorphous Structure
$M_{FC}$ = Weight (g) of Crystalline Vinylidene Fluoride Resin Existing in Surface Layer in 100 g of Film
M = Weight (g) of Surface Layer in 100 g of Film

$$\text{Crystallinity (\%) of Surface Layer} = M_{FC}/M \times 100$$

Here, $M_{FC} = Ic/(Ic + Ia) \times 100$.

M was calculated by specific weight of each layer and a layer constituent ratio (the thickness of each layer) of the sample of which the crystallinity had been measured.

The specific weight of each layer was calculated by a blending ratio of the raw material.

The layer constituent ratio of the film was measured as follows. The film was interposed and fixed between small metal vises, and cut with a single edged knife such that the sectional surface of the film became smooth. In a state where the film was interposed between the vises, the sectional surface of the film was observed with a confocal laser microscope (VK-X110, manufactured by KEYENCE CORPORATION) at a magnification of 2000 times, the thickness of each layer was calculated at 10 spots to obtain an average value, and the layer constituent ratio was calculated from the result thereof.

<Calculation of Ratio (%) of $\alpha$ Crystals to Total Crystal Components>

A ratio of $\alpha$ crystals was obtained by measuring an infrared absorption spectrum using an ATR unit (UMA-500) of FT-IR (Main Unit: FTS-135), manufactured by Bio-Rad Laboratories, Inc.

From the obtained spectrum, absorption intensity at a wave number of 840 $cm^{-1}$ (a peak height (A)) that is characteristic absorption of $\beta$ crystals and absorption intensity at a wave number of 765 $cm^{-1}$ (a peak height (B)) that is characteristic absorption of the $\alpha$ crystals were obtained, and a component ratio (%) of the $\alpha$ crystals was calculated by the following computation expression.

$$(B)/((A) + (B)) \times 100(\%)$$

<Measurement of Melt Mass Flow Rate (MFR)>

MFR was measured at 240°C and a load of 2.16 kgf, on the basis of JIS K7210-1. As a measurement machine, a melt indexer F-F01, manufactured by Toyo Seiki Seisaku-sho, Ltd., was used.

[Table 1]

| | | | Example 1 | Example 2 | Example 3 | Example 4 | Example 5 | Example 6 | Example 7 |
|---|---|---|---|---|---|---|---|---|---|
| Raw material formulation of vinylidene fluoride resin multilayer film | Blending formulation of surface layer | Type of vinylidene fluoride resin | ① 1000HD ② K720 | ① 1000HD ② K720 | ① 1000HD ② K720 | ① 1000HD ② K720 | ① 1000HD ② K720 | ① 1000HD ② K720 | ① 1000HD ② K720 |
| | | Blending amount [% by mass] | ① 60 ② 30 | ① 60 ② 30 | ① 60 ② 30 | ① 60 ② 30 | ① 60 ② 30 | ① 60 ② 30 | ① 60 ② 30 |
| | | Type of methacrylic ester resin | MGSS | MGSS | MGSS | MGSS | MGSS | MGSS | MGSS |
| | | Blending amount [% by mass] | 10 | 10 | 10 | 10 | 10 | 10 | 10 |
| | Blending formulation of back layer | Type of vinylidene fluoride resin | K720 | K720 | K720 | K720 | K720 | K720 | K720 |
| | | Blending amount [% by mass] | 0 | 0 | 0 | 0 | 0 | 10 | 5 |
| | | Type of methacrylic ester resin | HBS000 | HBS000 | HBS000 | HBS000 | HBS000 | HBS000 | HBS000 |
| | | Blending amount [% by mass] | 100 | 100 | 100 | 100 | 100 | 90 | 95 |
| | | Type of ultraviolet absorber | Compound A | Compound B | Compound C | Compound A | Compound A | Compound A | Compound A |
| | | Molecular weight of ultraviolet absorber | 606 | 510 | 700 | 606 | 606 | 606 | 606 |
| | | Blending amount [parts by mass] with respect to 100 parts by mass of resins | 2.1 | 2.1 | 2.1 | 0.1 | 5 | 2.1 | 2.1 |
| Thickness of vinylidene fluoride resin multilayer film | Thickness [μm] of vinylidene fluoride resin multilayer film | | 50 | 50 | 50 | 50 | 50 | 50 | 50 |
| | Thickness [μm] of surface layer | | 17 | 17 | 17 | 17 | 17 | 17 | 17 |
| | Thickness [μm] of back layer | | 33 | 33 | 33 | 33 | 33 | 33 | 33 |
| Capability of vinylidene fluoride resin multilayer film | Discoloration resistance ($\Delta E$) to thermal cycle | | 2.0 | 2.5 | 1.5 | 1.0 | 2.5 | 2.5 | 2.5 |
| | Bleedout resistance to thermal cycle | | Excellent | Excellent | Excellent | Excellent | Excellent | Excellent | Excellent |
| | Ultraviolet cutting capability ($\Delta b$) | | 1.5 | 1.5 | 1.5 | 1.5 | 1.5 | 1.5 | 1.5 |
| | HAZE | | 1.5 | 1.5 | 1.5 | 1.5 | 1.7 | 1.5 | 1.5 |

[Table 2]

| | | | Comparative Example 1 | Comparative Example 2 | Comparative Example 3 | Comparative Example 4 | Comparative Example 5 |
|---|---|---|---|---|---|---|---|
| Raw material formulation of vinylidene fluoride resin multilayer film | Blending formulation of surface layer | Type of vinylidene fluoride resin | ① 1000HD ② K720 | ① 1000HD ② K720 | ① 1000HD ② K720 | ① 1000HD ② K720 | ① 1000HD ② K720 |
| | | Blending amount [% by mass] | ① 60 ② 30 | ① 60 ② 30 | ① 60 ② 30 | ① 60 ② 30 | ① 60 ② 30 |
| | | Type of methacrylic ester resin | MGSS | MGSS | MGSS | MGSS | MGSS |
| | | Blending amount [% by mass] | 10 | 10 | 10 | 10 | 10 |
| | Blending formulation of back layer | Type of vinylidene fluoride resin | K720 | K720 | K720 | K720 | K720 |
| | | Blending amount [% by mass] | 0 | 0 | 20 | 0 | 20 |
| | | Type of methacrylic ester resin | HBS000 | HBS000 | HBS000 | HBS000 | HBS000 |
| | | Blending amount [% by mass] | 100 | 100 | 80 | 100 | 80 |
| | | Type of ultraviolet absorber | Tinuvin 1577ED | Compound A | Compound A | - | Tinuvin 1577ED |
| | | Molecular weight of ultraviolet absorber | 426 | 606 | 606 | - | 426 |
| | | Blending amount [parts by mass] with respect to 100 parts by mass of resins | 2.1 | 8 | 2.1 | 0.0 | 2.1 |
| Thickness of vinylidene fluoride resin multilayer film | Thickness [μm] of vinylidene fluoride resin multilayer film | | 50 | 50 | 50 | 50 | 50 |
| | Thickness [μm] of surface layer | | 17 | 17 | 17 | 17 | 17 |
| | Thickness [μm] of back layer | | 33 | 33 | 33 | 33 | 33 |
| Capability of vinylidene fluoride resin multilayer film | Discoloration resistance (ΔE) to thermal cycle | | 6.5 | 4.0 | 6.0 | 0.5 | 6.5 |
| | Bleedout resistance to thermal cycle | | Unallowable | Unallowable | Unallowable | Excellent | Unallowable |
| | Ultraviolet cutting capability (Δb) | | 1.5 | 1.5 | 1.5 | 25.0 | 2.5 |
| | HAZE | | 2.0 | 2.0 | 2.5 | 1.3 | 3.0 |

[Table 3]

| | | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 |
|---|---|---|---|---|---|---|---|---|---|---|---|---|---|---|
| Conditions for manufacturing vinylidene fluoride resin multilayer film | Surface layer | Extruder setting temperature [°C] during compounding | 240 | 240 | 240 | 240 | 240 | 240 | 240 | 240 | 240 | 240 | 240 | 240 |
| | | Screw rotation frequency [RPM] during compounding | 340 | 340 | 340 | 340 | 340 | 340 | 340 | 340 | 340 | 340 | 340 | 340 |
| | | Extrusion speed [kg/h] during compounding | 52.6 | 52.6 | 52.6 | 52.6 | 52.6 | 52.6 | 52.6 | 52.6 | 52.6 | 52.6 | 52.6 | 52.6 |
| | | Extruder setting temperature [°C] during film manufacturing | 240 | 240 | 240 | 240 | 240 | 240 | 240 | 240 | 240 | 240 | 240 | 240 |
| | | Screw rotation frequency [RPM] during film manufacturing | 41 | 41 | 41 | 41 | 41 | 41 | 41 | 41 | 41 | 41 | 41 | 41 |
| | | Extrusion speed [kg/h] during film manufacturing | 11.6 | 11.6 | 11.6 | 11.6 | 11.6 | 11.6 | 11.6 | 11.6 | 11.6 | 11.6 | 11.6 | 11.6 |
| | Back layer | Extruder setting temperature [°C] during compounding | 240 | 240 | 240 | 240 | 240 | 240 | 240 | 240 | 240 | 240 | 240 | 240 |
| | | Screw rotation frequency [RPM] during compounding | 340 | 340 | 340 | 340 | 340 | 340 | 340 | 340 | 340 | 340 | 340 | 340 |
| | | Extrusion speed [kg/h] during compounding | 52.6 | 52.6 | 52.6 | 52.6 | 52.6 | 52.6 | 52.6 | 52.6 | 52.6 | 52.6 | 52.6 | 52.6 |
| | | Extruder setting temperature [°C] during film manufacturing | 220 | 220 | 220 | 220 | 220 | 220 | 220 | 220 | 220 | 220 | 220 | 220 |
| | | Screw rotation frequency [RPM] during film manufacturing | 50 | 50 | 50 | 50 | 50 | 50 | 50 | 50 | 50 | 50 | 50 | 50 |
| | | Extrusion speed [kg/h] during film manufacturing | 13.7 | 13.7 | 13.7 | 13.7 | 13.7 | 13.7 | 13.7 | 13.7 | 13.7 | 13.7 | 13.7 | 13.7 |
| | Setting temperature [°C] of extruder/T-type die part | | 240 | 240 | 240 | 240 | 240 | 240 | 240 | 240 | 240 | 240 | 240 | 240 |
| | Circulating water setting temperature [°C] of first cooling roll and touch roll | | 65 | 65 | 65 | 65 | 65 | 65 | 65 | 65 | 65 | 65 | 65 | 65 |

<Results>

The vinylidene fluoride resin multilayer film of Comparative Example 5 was a vinylidene fluoride resin multilayer film obtained by a triazine ultraviolet absorber having a molecular weight of less than 500, but in the vinylidene fluoride resin multilayer film, the discoloration occurred with respect to a temperature change, the bleedout occurred with respect to a temperature change, and the ultraviolet cutting capability was also degraded.

As shown in Comparative Example 5 and Comparative Example 1, since the vinylidene fluoride resin multilayer film using the triazine ultraviolet absorber having a molecular weight of less than 500 contained 20% by mass or less of the vinylidene fluoride resin in the back layer, ultraviolet cutting properties were obtained, but the discoloration occurred with respect to a temperature change, and the bleedout occurred with respect to a temperature change.

As shown in Comparative Examples 1 and 4, since the triazine ultraviolet absorber was not used, the discoloration was capable of being extremely suppressed with respect to a temperature change, but the ultraviolet cutting properties were degraded.

As shown in Examples 1 to 3, the vinylidene fluoride resin multilayer film using a compound for a triazine ultraviolet absorber having a molecular weight of 500 or more was extremely excellent in the discoloration resistance to a temperature change, the bleedout resistance to a temperature change, and the ultraviolet cutting capability. Further, in a case where the molecular weight of the compound for a triazine ultraviolet absorber is in a range of 510 to 800 (preferably, the compounds A, B, and C), a vinylidene fluoride resin multilayer film using the compound is more extremely excellent in the discoloration resistance to a temperature change, the bleedout resistance to a temperature change, and the ultraviolet cutting capability.

In addition, as shown in Comparative Example 3, in a case where the back layer contained 20% by mass or more of the vinylidene fluoride resin, the discoloration resistance to a temperature change and the bleedout resistance to a temperature change were degraded.

Accordingly, even in a case of using the compound for a triazine ultraviolet absorber having a molecular weight of 500 or more, it was necessary that the back layer contained less than 20% by mass of the vinylidene fluoride resin in order to be excellent in all of the discoloration resistance to a temperature change, the bleedout resistance to a temperature change, and the ultraviolet cutting capability.

Further, as shown in Example 1, and Examples 6 and 7, in a case where the back layer contains 0 to 10% by mass of the vinylidene fluoride resin (on the basis of the total amount of the resin components of the back layer), the discoloration resistance to a temperature change, the bleedout resistance to a temperature change, and the ultraviolet cutting capability are more extremely excellent. The content of the vinylidene fluoride resin in the back layer is more preferably 0 to 5% by mass, and even more preferably substantially 0% by mass, that is, it is preferable that the content of the methacrylic ester resin in the back layer is substantially 100% by mass. Accordingly, the discoloration resistance to a temperature change, the bleedout resistance to a temperature change, and the ultraviolet cutting capability of the vinylidene fluoride resin multilayer film are even more extremely excellent.

In addition, as shown in Example 1, Example 4, Example 5, Comparative Example 2, and Comparative Example 4, even in a case of using the compound for a triazine ultraviolet absorber having a molecular weight of 500 or more, it was necessary that the used amount thereof was less than 3.5 parts by mass with respect to 100 parts by mass of the resins of the back layer. Then, as shown in Example 1, and Example 4, in a case where the used amount of the compound for a triazine ultraviolet absorber having a molecular weight of 500 or more was 0.1 to 3.5 parts by mass with respect to 100 parts by mass of the resins of the back layer, the discoloration resistance to a temperature change, the bleedout resistance to a temperature change, and the ultraviolet cutting capability of the vinylidene fluoride resin multilayer film were all excellent.

In Examples 1 to 7, the crystallinity of each surface layer was 45% or more, the ratio of the $\alpha$ crystals to the total crystal components of each vinylidene fluoride resin was 60% or more, and the peak intensity ratio of each $\alpha$ crystal was in a range of 70 to 90%, in accordance with the method for measuring the crystallinity and the method for measuring the peak intensity ratio of the $\alpha$ crystals.

In Examples 1 to 7, an absolute value of a difference in each melt mass flow rate (MFR) was in a range of 1.0 to 2.0 g/10 min, and MFRs of the surface layer and the back layer were 0.5 to 25.0 g/10 min and 0.5 to 25.0 g/10 min, respectively, in accordance with the method for measuring MFR.

In Examples 1 to 7, a total light transmittance was 90% or more. In addition, 0.1% by mass of a phenolic oxidant inhibitor as an antioxidant agent can be contained in the back layer of Examples 1 to 7.

**Industrial Applicability**

The vinylidene fluoride resin multilayer film of the present invention is suitable for an automobile interior such as an instrument panel, a dashboard, and a door, and an automobile exterior such as a body, a front bumper, and a rear bumper. In addition, the vinylidene fluoride resin multilayer film of the present invention can also be used in an

interior/exterior film for an infrastructure, various architectures, and the like, and an interior/exterior film for a railroad vehicle, an aircraft, a marine vessel, a space vessel, and the like.

## Reference Signs List

1: single vinylidene fluoride resin film, 2: surface layer, 3: back layer, 4: decorative layer, 5: pressure-sensitive adhesive layer, 11: ABS resin plate or iron plate.

## Claims

1. A vinylidene fluoride resin multilayer film comprising two layers in which a back layer and a surface layer are laminated,

   wherein the surface layer comprises 80% by mass or more of a vinylidene fluoride resin on the basis of a total amount of resin components of the surface layer,
   the back layer comprises 85% by mass or more of a methacrylic ester resin on the basis of a total amount of resin components of the back layer,
   the back layer comprises 3.5 parts by mass or less of a triazine ultraviolet absorber having a molecular weight of 500 or more with respect to 100 parts by mass of total resin components of the back layer, and wherein the triazine ultraviolet absorber is selected from 2-[4,6-di(4-biphenylyl)-1,3,5-triazine-2-yl]-5-(2-ethylhexyloxy) phenol; 2,4-bis(2,4-dimethylphenyl)-6-(2-hydroxy-4-n-octyloxyphenyl)-1,3,5-triazine and 2,4,6-tris(2-hydroxy-4-hexyloxy-3-methylphenyl)-1,3,5-triazine.

2. The vinylidene fluoride resin multilayer film according to claim 1,
   wherein the surface layer comprises 80% by mass or more of the vinylidene fluoride resin and 20% by mass or less of the methacrylic ester resin, on the basis of the total amount of the resin components of the surface layer.

3. The vinylidene fluoride resin multilayer film according to claim 1 or 2,
   wherein the vinylidene fluoride resin of the surface layer comprises a copolymer of vinylidene fluoride and hexafluoropropene and/or polyvinylidene fluoride.

4. The vinylidene fluoride resin multilayer film according to any one of claims 1 to 3,
   wherein HAZE to be measured on the basis of JIS K7136 is less than 10%.

5. The vinylidene fluoride resin multilayer film according to any one of claims 1 to 4,
   wherein the vinylidene fluoride resin multilayer film is used for a decorative film.

6. An automobile interior/exterior film formed by using the vinylidene fluoride resin multilayer film according to any one of claims 1 to 5.

7. An automobile component in which the automobile interior/exterior film according to claim 6 is adhered to a surface.

8. An automobile in which the automobile interior/exterior film according to claim 6 is adhered to a surface.

## Patentansprüche

1. Mehrschichtfolie aus Vinylidenfluoridharz umfassend zwei Schichten in denen eine Rückschicht und eine Oberflächenschicht laminiert sind,

   wobei die Oberflächenschicht umfasst 80 Masse-% oder mehr eines Vinylidenfluoridharzes, bezogen auf die Gesamtmenge der Harzkomponenten der Oberflächenschicht, die Rückschicht umfasst 85 Masse-% oder mehr eines Methacrylesterharzes, bezogen auf die Gesamtmenge der Harzkomponenten der Rückschicht,
   die Rückschicht umfasst 3.5 Masseteile oder weniger eines Triazin-Ultraviolettabsorbers mit einem Molekulargewicht von 500 oder mehr, bezogen auf 100 Masseteile der gesamten Harzkomponenten der Rückschicht, und wobei der Triazin-Ultraviolettabsorber ausgewählt ist aus 2-[4,6-Di(4-biphenylyl)-1,3,5-triazin-2-yl]-5-(2-Ethylhexyloxy)phenol; 2,4-Bis(2,4-dimethylphenyl)-6-(2-hydroxy-4-N-octyloxyphenyl)-1,3,5-triazin und 2,4,6-Tris(2-hydroxy-4-hexyloxy-3-methylphenyl)-1,3,5-triazin.

2. Mehrschichtfolie aus Vinylidenfluoridharz gemäß Anspruch 1, wobei die Oberflächenschicht umfasst 80 Masse-% oder mehr des Vinylidenfluoridharzes und 20 Masse-% oder weniger des Methacrylesterharzes, bezogen auf die Gesamtmenge der Harzkomponenten der Oberflächenschicht.

3. Mehrschichtfolie aus Vinylidenfluoridharz gemäß Anspruch 1 oder 2, wobei das Vinylidenfluoridharz der Oberflächenschicht umfasst ein Copolymer aus Vinylidenfluorid und Hexafluorpropen und/oder Polyvinylidenfluorid.

4. Mehrschichtfolie aus Vinylidenfluoridharz gemäß mindestens einem der Ansprüche 1 bis 3, wobei der auf der Grundlage von JIS K7136 zu messende HAZE-Wert weniger als 10% beträgt.

5. Mehrschichtfolie aus Vinylidenfluoridharz gemäß mindestens einem der Ansprüche 1 bis 4, wobei die Mehrschichtfolie aus Vinylidenfluoridharz für eine dekorative Folie verwendet wird.

6. Automobil-Innen-/Außenfolie, die unter Verwendung der Mehrschichtfolie aus Vinylidenfluoridharz gemäß mindestens einem der Ansprüche 1 bis 5 gebildet wird.

7. Automobilbauteil, bei dem die Automobil-Innen-/Außenfolie gemäß Anspruch 6 auf eine Oberfläche geklebt ist.

8. Automobil, bei dem die Automobil-Innen-/Außenfolie gemäß Anspruch 6 auf eine Oberfläche geklebt ist.

## Revendications

1. Film multicouche de résine de fluorure de vinylidène comprenant deux couches dans lequel une couche arrière et une couche de surface sont laminées,

   dans lequel la couche de surface comprend 80 % en masse ou plus d'une résine de fluorure de vinylidène sur la base de la quantité totale de composants de résine de la couche de surface,
   la couche arrière comprend 85 % en masse ou plus d'une résine d'ester méthacrylique sur la base d'une quantité totale de composants de résine de la couche arrière,
   la couche arrière comprend 3,5 parties en masse ou moins d'un absorbeur d'ultraviolets au triazine ayant un poids moléculaire de 500 ou plus par rapport à 100 parties en masse du total des composants de résine de la couche arrière, et dans lequel l'absorbeur d'ultraviolets au triazine est sélectionné parmi 2-[4,6-di(4-biphénylyl)-1,3,5-triazine-2-yl]-5-(2-éthylhexyloxy) phénol ; 2,4-bis(2,4-diméthylphényl)-6-(2-hydroxy-4-n-octyloxyphényl)-1,3,5-triazine et 2,4,6-tris(2-hydroxy-4-hexyloxy-3-méthylphényl)-1,3,5-triazine.

2. Film multicouche de résine de fluorure de vinylidène selon la revendication 1, dans lequel la couche de surface comprend 80 % en masse ou plus de la résine de fluorure de vinylidène et 20 % en masse ou moins de la résine d'ester méthacrylique, sur la base de la quantité totale des composants de résine de la couche de surface.

3. Film multicouche de résine de fluorure de vinylidène selon la revendication 1 ou la revendication 2, dans lequel la résine de fluorure de vinylidène de la couche de surface comprend un copolymère de fluorure de vinylidène et d'hexafluoropropène et/ou de fluorure de polyvinylidène.

4. Film multicouche de résine de fluorure de vinylidène selon l'une quelconque des revendications 1 à 3, dans lequel un TROUBLE à mesurer sur la base de JIS K7136 est inférieure à 10 %.

5. Film multicouche de résine de fluorure de vinylidène selon l'une quelconque des revendications 1 à 4, dans lequel le film multicouche de résine de fluorure de vinylidène est utilisé pour un film décoratif.

6. Film intérieur/extérieur pour automobile formé en utilisant le film multicouche de résine de fluorure de vinylidène selon l'une quelconque des revendications 1 à 5.

7. Composant automobile dans lequel le film intérieur/extérieur pour automobile selon la revendication 6 est collé à une surface.

**8.** Automobile dans laquelle le film intérieur/extérieur pour automobile selon la revendication 6 est collé à une surface.

*Fig.1*

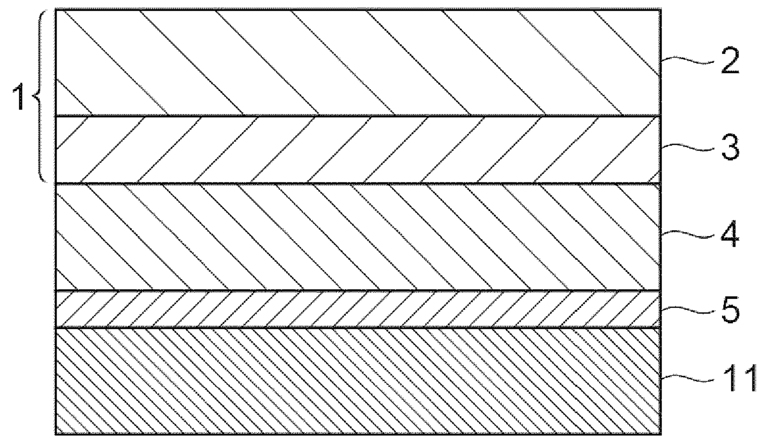

Fig.2

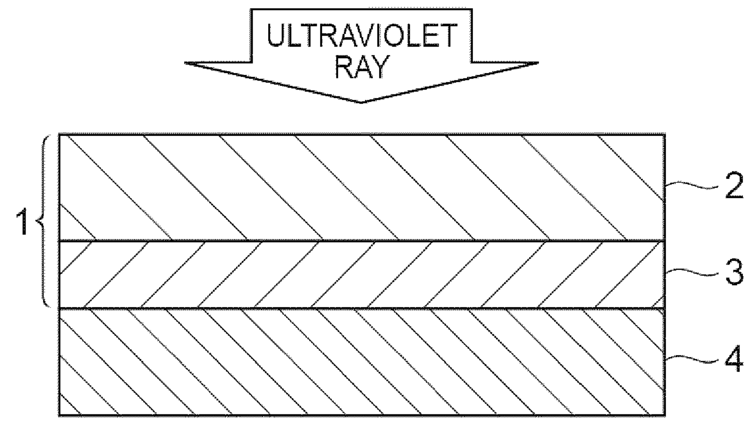

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017043467 A1
- WO 2015016147 A
- WO 2019107302 A
- JP 2004160883 A
- JP 2010270336 A
- JP H11503112 W


### Non-patent literature cited in the description


- **HANADA TOMOMI ; ANDO YUTAKA.** Crystallization of Polyvinylidene Fluoride in Blend System of Polyvinylidene Fluoride, Polyvinyl Acetate, and Polymethyl Methacrylate. *Tokyo Kasei Gakuin University Bulletin,* July 1992, vol. 32, 5-12